# EUROPEAN PATENT SPECIFICATION

(11) **EP 0 548 232 B1**
(45) Date of publication and mention of the grant of the patent: **15.06.1994**
(21) Application number: 91917041.5
(22) Date of filing: 12.09.1991
(51) Int. Cl.: A01G 9/24

(54) **GREENHOUSE**
GEWÄSCHSHAUS
SERRE

(30) Priority: 13.09.1990 NL 9002015
(43) Date of publication of application: 30.06.1993
(73) Proprietor: ALCOMIJ B.V., NL-2691 AS 's Gravenzande (NL); HOUDSTERMAATSCHAPPIJ HULSCHER-HOOGEVEEN B.V., NL-2288 GB Rijswijk (NL)
(72) Inventor: HULSCHER, Alphonsus, Johannes, N-2317 KZ Leiden (NL)
(74) Representative: Smulders, Theodorus A.H.J., Ir.
(86) International application number: NL9100166
(87) International publication number: WO9204820

(56) References cited:
- FR-A- 1 544 502
- FR-A- 2 041 516
- FR-A- 2 429 306
- FR-A- 2 446 590
- GB-A- 670 802
- GB-A- 1 374 739
- NL-A- 8 102 213

## Description

This invention relates to a greenhouse with a roof construction consisting of one or more roofs of the saddle type, there being provided one or more ventilation windows in at least one roof face of such a saddle roof.

Such a greenhouse is well known and is disclosed for instance in Dutch patent application 298,328. The known greenhouses always comprise a glass cover. The windows of the known greenhouses are rectangular. The cost price per square meter of the known greenhouse is comparatively high, so that the known greenhouse is hardly, if at all, used in the so-called developing countries. For use in those countries a drastically lower cost price is desirable. This could be accomplished by employing a cover of plastics-foil instead of glass. Heretofore, such a cover has not been used in greenhouses with a saddle-roof construction and windows that can be opened in the roof faces, presumably because the roof construction does not possess sufficient rigidity for a foil cover. A plastics-foil cover does find application in other types of greenhouses, for instance in semicylindrical greenhouses without windows that can be opened.

The object of the invention, therefore, is to provide a greenhouse with a roof construction, such that while windows that can be opened are maintained in the roof or roofs, it permits the use of a foil cover, rather than a glass cover, while, further, the construction is as economical as possible as regards construction, cost price and use.

This object is realized according to the invention with a greenhouse wherein at least a number of the ventilation windows are substantially shaped like an isosceles triangle, with the base of the triangle, which serves as hinge line, extending along the ridge of the saddle roof in question and the apex of the triangle lying at the lower edge of one of the lateral faces of that saddle roof. The advantage of using, in accordance with the invention, substantially triangular windows is that a constructionally very rigid roof build-up is obtained, partly by virtue of the bars extending obliquely in the plane of the roof from the foot of the windows to the ridge pole, on or against which bars the windows rest in the operative closed position. Thus, the roof construction is trapezoid, as it were. This provides greater robustness than does the exclusive use of bars extending in a direction perpendicular to the ridge, so that eventually fewer bars along the entire length of the construction will suffice. Thus, if substantially triangular windows are used, a minimum of material is required for the roof construction, so that more light can enter the greenhouse, which, as is well known, leads to a greater yield of crops in the greenhouse. Further, the substantially triangular windows themselves are very rigid and strong and, partly owing to this, can be operated and handled without problems. The greenhouse according to the invention is suitable in particular for use in so-called hot countries, where a good ventilation system is highly desirable. By arranging for the base of the triangular windows to extend in or along the ridge, the largest opening is in the ridge of the greenhouse when the window is open, which ensures optimum ventilation.

The windows in the greenhouse according to the invention are substantially triangular. Suitably, however, the apex of the triangle of each substantially triangular window can be rounded or flattened. The advantage thereof is that in that case the glazing bar along the legs of the triangle can be formed as one whole which is suitably curved or given a trapezoid shape. Otherwise, if the apex of the triangle is an acute angle, there is a welding joint present.

In a preferred embodiment of the greenhouse according to the invention, the substantially triangular windows in a saddle-roof are arranged in pairs on opposite sides of the ridge of the saddle roof, at least one operating element being provided between the two windows of each pair for operating one or both windows of a pair. Advantageously, in such a construction only one operating mechanism is required for each pair of windows.

In another suitable embodiment, each substantially triangular window is reinforced by a rod or similar body, of which the terminal ends are connected to the upright legs of the triangle at a suitable point thereof, which rod or body extends virtually parallel to the base of the triangle and itself forms the base of an isosceles triangle which is built up from such rods or bodies and which has its apex angle directed inwardly relative to the plane of the triangular window, while the apex of that triangle is adapted to be engaged by an element for operating the window. The legs of the isosceles triangle, whose base thus serves as a reinforcement of the triangular window, function in this construction as an extension support for the window. The operating element for extending the window can be any means suitable for such a purpose and may for instance comprise, as energizing means, a hydraulic cylinder, a pneumatic cylinder, or a spring device. Preferably, however, the operating element comprises a gas spring, for instance a gas spring filled with nitrogen. A gas spring is particularly suitable in the case of pairs of opposite windows, because then one gas spring is sufficient to operate two windows simultaneously and, if so desired, independently of each other.

In a further preferred embodiment of the greenhouse according to the invention, a cable is attached to the apex of the triangle of each substantially triangular window for closing the window when it is open. In this embodiment, the cables attached to all windows disposed in a single roof face can be connected to a winch, so that the windows in that roof face can all be closed by hand at the same time. If operating elements with gas springs are used, the windows can thereafter be opened again by paying out the cables. Such an embodiment with manually operated cables and with an operating element comprising a gas spring is very suitable for use in a greenhouse according to the invention when it is arranged in surroundings where electricity for feeding an electric motor or the like for energizing operating means is not readily available. A further advantage of the construction described is that the windows can be operated in each roof face separately. Thus, it is possible to open the windows only on the leeward side of the greenhouse in the case of wind blowing outside. Further, in the construction described, if the closing cables are properly taut, no rattling of the windows will occur.

The greenhouse according to the invention is very suitable for the use of a cover of plastics foil. Such a cover can be arranged in units of the size of the distance between two adjacent windows in a roof face. The advantage thereof is that relatively small foil units are employed (in contrast with the abovementioned semicylindrical greenhouses with a foil cover, where units of a length of about 50 m are used). The cost of replacement of units in the case of damage will accordingly be less. Further, such a construction offers, for instance, the possibility of replacing a foil unit during the summer by a unit of gauze to promote ventilation.

Securing the foil to be employed can appropriately be done by a well-considered choice of the shape of the bars in the roof construction. Preferably, for securing and retaining the plastics foil without damage, at least a number of the bars of the roof construction are constructed as channel sections with a coat of plastics, in which sections a foil arranged thereover is retained by a suitably shaped section strip to be pressed into the channel with foil disposed thereon. In particular when using steel bars, the problem presents itself that as a result of the incidence of the sunlight and its reflection by the section, the foil will wear in the course of time, the more so because the steel will always be slightly rough and heating by the sun will invariably lead to some degree of creep in the material, so that the foil may sustain damage. This phenomenon is prevented by the use of a plastics coat on the section, which coat can be loosely applied to the section. Such a coat further screens any sharp edges of the section which might lacerate the foil when it is being pressed into the section by means of a suitable section strip.

The term greenhouse as used hereinbefore should be understood to have a wide scope of meaning. Thus, it is understood to include a controlled-climate greenhouse of the type sometimes used in fruit culture. In such a controlled-climate greenhouse, oftentimes a cover of shade cloth, rather than a glass or plastics-foil roof cover, is used.

The invention will now be elucidated with reference to the acompanying drawings, in which:
Fig. 1 is a front view of an embodiment of the greenhouse according to the invention;
Fig. 2 is a top plan view of the greenhouse according to Fig. 1 with open roof windows; and
Fig. 3 is a perspective view of a part of the roof construction of an embodiment of the greenhouse according to the invention, before a cover is applied thereto.

In the figures, like parts are designated by like reference characters.

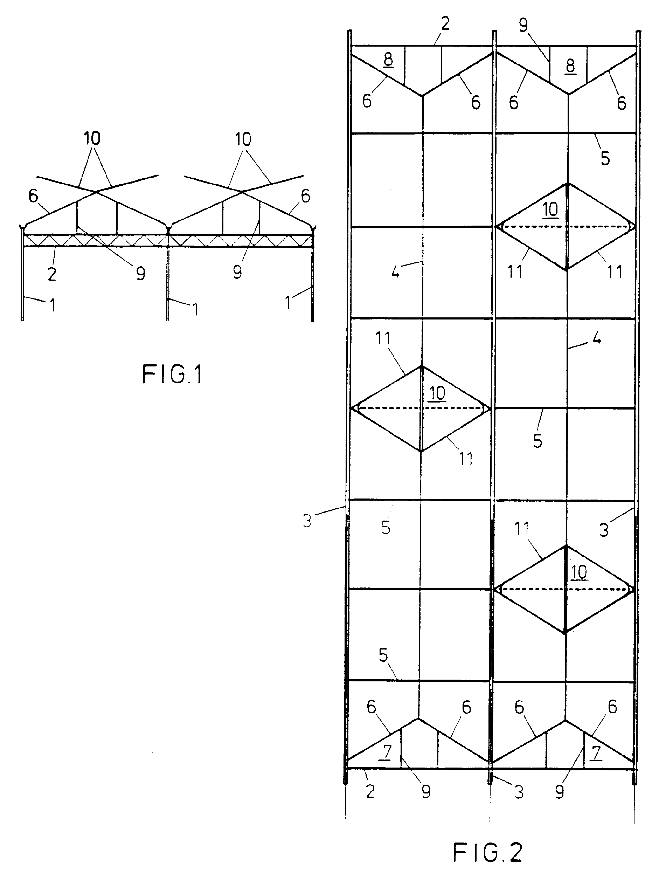

The roof-bearing construction of the greenhouse according to Figs 1 and 2 comprises a plurality of uprights 1 which, at or adjacent to their upper ends, are connected to crossbeams 2 and support these. The crossbeams 2 may have any form that is suitable for such beams, for instance the form as shown, ie. double beams having zig-zag reinforcing ties arranged between them. Other constructions of the lower part of the greenhouse according to the invention are possible. The walls of the lower part can suitably consist of glass or plastics foil.

In the embodiment of the greenhouse according to the invention shown in Figs 1 and 2, the roof consists of two parallel units of the saddle-roof type. Each saddle roof is bounded on opposite sides by a gutter 3, resting on or supported by the uprights 1. The ridge of each saddle roof is formed by a ridge pole or ridge beam 4. The ridge beam 4 is partly supported by bars 5, which are arranged in suitably spaced relationship, are connected to the ridge beam 4 and one of the gutters 3 and each extend in a plane perpendicular to the ridge beam 4. At the ends of each of the saddle roofs, the bars 6, supporting the adjacent ridge beam 4, are arranged obliquely, so that the front face 7 and the rear face 8 of each saddle roof are inclined inwardly. Thus, each lateral face of the saddle roofs is essentially shaped as a trapezoid, the shorter parallel side thereof lying in the ridge. To enhance rigidity of the roof construction, there may be arranged in the front and rear faces 7 and 8, respectively, additional reinforcement rods 9 extending from the crossbeam 2 to the oblique bars 6 in a vertical plane.

If the width of each saddle roof is 4 m, for instance, the bars 5 can suitably be arranged at 2.5 m intervals. Steel is very suitable as a material for the roof construction described, but aluminum is also an option. The view shown in Figs 1 and 2 is intended purely as an illustration. The greenhouse can be expanded in transverse direction to suit requirements, in which case more than two saddle roofs will be employed. In principle, expansion of the construction in longitudinal direction is also unlimited.

According to the invention, triangular windows 10 are provided at suitable points in the roof construction. Each window 10 is shaped as an isosceles triangle whose base, also the hinge line, lies in or along the ridge beam 4 of the roof. In the embodiment shown, the windows 10 are arranged in pairs in the lateral faces of each saddle roof. Although arrangement in pairs is preferable with a view to simplicity of operation, it is not an absolute requirement.

The glazing bars 11 along the isosceles legs of each triangular window can be straight, with a joint, for instance a weld, in the apex. It is more convenient, however, to have a single glazing bar, suitably bent at the top. In that case, the top is not a real (acute) angle, but curved or even flattened. The term triangle as used with reference to windows 10 is understood to include such a trapezoid shape or a shape with a rounded top.

The frames of the triangular windows are formed by suitable bars or sections, which, accordingly, extend obliquely between the respective gutters 3 and the ridge 4. The construction thus formed is very rigid, so that a minimum of material will suffice. As noted above, this construction permits employing a distance of 2.5 m between the respective bars 5 if the saddle roof is 4 m wide, as constrasted with the conventional distance of 1.5 m between bars in saddle roof constructions with rectangular windows.

The roof construction described is very suitable for the use of plastics foil as a roof cover. Such foil can be arranged in units of a size of the distance between adjacent windows in a face of the saddle roof. By suitably choosing the bars, such a foil can be arranged readily and very fast. For that purpose, the bars preferably have a channel section. To avoid damage during application or in operation, the channel sections are preferably provided with a plastics coat that may or may not be loose. Application of the foil is effected by placing it over the channel and clamping the foil in the channel using suitable section strips.

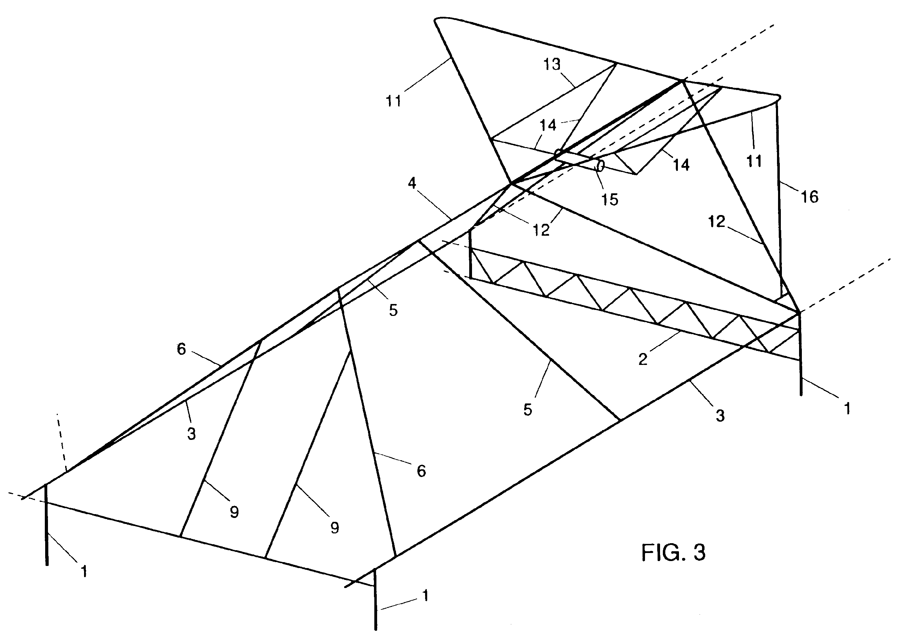

Fig. 3 is a perspective view of a part of the roof construction of an embodiment of the greenhouse according to the invention. In this view with open windows 10, it can be seen how the glazing bars 11 can cooperate with frame bars 12 extending obliquely in the lateral face of the roof. In the embodiment shown, each window 10 is reinforced by an isosceles triangle built up from rods, the base 13 of the triangle interconnecting the legs 11 of the isosceles triangle of the window 10 approximately in the middle. The legs 14 of the reinforcement triangle extend inwardly from the plane of the window 10. Engaging the apex of the reinforcement triangle is an operating element 15, which in this case comprises a gas spring. Thus, the legs 14 of the reinforcement triangle serve as it were as an extension support for the window 10. The gas spring in the operating element 15 permanently pushes the legs 14 of the reinforcement triangle sideways and upwards, so that the window 10 would invariably be in the opened position if it were not for the fact that the window can be closed counter to the action of the gas spring by pulling the cable 16, which is attached to the top of the window 10. Of course, a different construction of the operating element for opening and closing the windows 10 is also possible.

The cables 16 at the tops of a succession of windows 10 in one lateral face of a saddle roof may be interconnected, so that this succession of windows can all be opened or closed at the same time, which may for instance be effected manually using a winch. Such a construction, used together with the gas springs which continuously exert a force, is particularly suitable for use in areas where energy sources for driving electric or other motors for mechanically operating the windows are not available.

## Claims

1. A greenhouse with a roof construction consisting of one or more roofs of the saddle type, there being provided one or more ventilation windows (10) in at least one roof face of such a saddle roof, characterized in that at least a number of the ventilation windows (10) are substantially shaped like an isosceles triangle, with the base of the triangle, which serves as hinge line, extending along the ridge (4) of the saddle roof in question and the apex of the triangle lying at the lower edge of one of the lateral faces of that saddle roof.

2. A greenhouse according to claim 1, characterized in that the apex of the triangle of each substantially triangular window is rounded or flattened.

3. A greenhouse according to claims 1-2, characterized in that the substantially triangular windows in a saddle roof are arranged in pairs on opposite sides of the ridge of the saddle roof, there being provided between the two windows of each pair at least one operating element for operating one or both windows of a pair.

4. A greenhouse according to claims 1-3, characterized in that each substantially triangular window is reinforced by a rod or similar body whose terminal ends are connected to the upright legs of the triangle at a suitable point thereof, which rod or which body extends virtually parallel to the base of the triangle and itself forms the base of an isosceles triangle which is built up from such rods or bodies and which has its apex angle directed inwardly relative to the plane of the triangular window, while an element for operating the window can engage the apex of that triangle.

5. A greenhouse according to claims 3-4, characterized in that the operating element comprises a gas spring.

6. A greenhouse according to claims 1-5, characterized in that at the apex of the triangle of each substantially triangular window a cable is attached, by means of which the window, when open, can be pulled shut.

7. A greenhouse according to claim 6, characterized in that the cables for closing the windows arranged in one of the two faces of a saddle roof, are interconnected so that said windows can be closed simultaneously.

8. A greenhouse according to claims 1-7, characterized in that plastics foil is used as a cover of the or each saddle roof.

9. A greenhouse according to claim 8, characterized in that for securing and retaining the plastics foil without damage, at least a number of the bars of the roof construction are formed as channel sections with a coat of plastics, in which sections a foil arranged thereover is retained by a suitably shaped section strip to be pressed into the channel with foil disposed thereon.

## Patentansprüche

1. Gewächshaus mit einer Dachkonstruktion, bestehend aus einem oder mehreren Dächern vom Satteltyp, wobei in mindestens einer Dachfläche eines solchen Satteldaches ein oder mehrere Lüftungsfenster (10) vorgesehen sind, dadurch gekennzeichnet, daß mindestens eine Anzahl der Lüftungsfenster (10) im wesentlichen die Form eines gleichschenkligen Dreiecks aufweist, wobei die Basis des Dreiecks, die als Scharnierlinie dient, sich längs des Firstes (4) des betreffenden Satteldaches erstreckt und die Spitze des Dreiecks an der unteren Kante einer der Seitenflächen dieses Satteldaches liegt.

2. Gewächshaus nach Anspruch 1, dadurch gekennzeichnet, daß die Spitze des Dreiecks jedes im wesentlichen dreieckigen Fensters abgerundet oder abgeflacht ist.

3. Gewächshaus nach Ansprüchen 1-2, dadurch gekennzeichnet, daß die im wesentlichen dreieckigen Fenster in einem Satteldach paarweise auf beiden Seiten des Firstes des Satteldaches angeordnet sind, wobei zwischen den zwei Fenstern jedes Paares mindestens ein Betätigungsorgan zum Betätigen eines oder beider Fenster eines Paares vorgesehen ist.

4. Gewächshaus nach Ansprüchen 1-3, dadurch gekennzeichnet, daß jedes im wesentlichen dreieckige Fenster durch eine Stange oder einen ähnlichen Körper verstärkt ist, dessen Enden mit den Schenkeln des Dreiecks in einem geeigneten Punkt derselben verbunden sind, welche Stange oder welcher Körper annähernd parallel zur Basis des Dreiecks verläuft und selbst die Basis eines gleichschenkligen Dreiecks bildet, das aus solchen Stangen oder Körpern aufgebaut ist und das mit seinem Spitzenwinkel relativ zur Ebene des dreieckigen Fensters einwärts gerichtet ist, während an der Spitze dieses Dreiecks ein Organ zum Betätigen des Fensters angreifen kann.

5. Gewächshaus nach Ansprüchen 3-4, dadurch gekennzeichnet, daß das Betätigungsorgan eine Gasfeder ist.

6. Gewächshaus nach Ansprüchen 1-5, dadurch gekennzeichnet, daß an der Spitze des Dreiecks jedes im wesentlichen dreieckigen Fensters ein Kabel befestigt ist, mit dessen Hilfe das Fenster, wenn es geöffnet ist, zugezogen werden kann.

7. Gewächshaus nach Anspruch 6, dadurch gekennzeichnet, daß die Kabel zum Schließen der Fenster, die in einer der zwei Flächen eines Satteldaches liegen, miteinander verbunden sind, so daß diese Fenster gleichzeitig geschlossen werden können.

8. Gewächshaus nach Ansprüchen 1-7, dadurch gekennzeichnet, daß als Bedeckung des oder jedes Satteldaches Kunststoffolie verwendet ist.

9. Gewächshaus nach Anspruch 8, dadurch gekennzeichnet, daß zum Befestigen und Festhalten der Kunststoffolie ohne Schaden mindestens eine Anzahl der Stangen der Dachkonstruktion als rinnenförmiges Profil mit einer Kunststoffbekleidung ausgebildet ist, in welchem Profil eine darüber gelegte Folie durch einen in die Rinne mit aufliegender Folie zu drückenden, passend geformten Profilstreifen festgehalten ist.

## Revendications

1. Serre comportant une structure de toiture constituée d'un ou de plusieurs toits du type en forme de selle, une ou plusieurs fenêtres de ventilation (10) étant prévues dans au moins un pan de toiture d'un tel toit en forme de selle, caractérisée en ce qu'au moins un certain nombre des fenêtres de ventilation (10) présentent essentiellement la forme d'un triangle isocèle dont la base du triangle, qui sert de charnière, s'étend le long de la faîtière (4) du toit en forme de selle en question, le sommet du triangle étant situé au bord inférieur d'une des faces latérales de ce toit en forme de selle.

2. Serre selon la revendication 1, caractérisée en ce que le sommet du triangle de chaque fenêtre essentiellement triangulaire est arrondi ou aplati.

3. Serre selon les revendications 1-2, caractérisée en ce que les fenêtres essentiellement triangulaires d'un toit en forme de selle sont agencées en paires sur des côtés opposés de la faîtière du toit en forme de selle, au moins un élément d'actionnement étant prévu entre les deux fenêtres de chaque paire en vue d'actionner une ou les deux fenêtres d'une paire.

4. Serre selon les revendications 1-3, caractérisée en ce que chaque fenêtre essentiellement triangulaire est renforcée par une barre ou un corps similaire, dont les extrémités sont reliées aux côtés montants du triangle en un point approprié de ceux-ci, cette barre ou ce corps s'étendant pratiquement parallèlement à la base du triangle et formant elle-même ou lui-même la base d'un triangle isocèle construit à partir de telles barres ou de tels corps, et dont l'angle du sommet est dirigé vers l'intérieur par rapport au plan de la fenêtre triangulaire, un élément d'actionnement de la fenêtre pouvant s'accrocher au sommet de ce triangle.

5. Serre selon les revendications 3-4, caractérisée en ce que l'élément d'actionnement comporte un ressort pneumatique.

6. Serre selon les revendications 1-5, caractérisée en ce qu'au sommet du triangle des chaque fenêtre essentiellement triangulaire est attaché un câble au moyen duquel la fenêtre peut être refermée lorsqu'elle est ouverte.

7. Serre selon la revendication 6, caractérisée en ce que les câbles de fermeture des fenêtres agencées dans un des deux pans du toit en forme de selle sont reliés, de telle sorte que les fenêtre peuvent être refermées simultanément.

8. Serre selon les revendications 1-7, caractérisée en ce que l'on utilise une feuille en plastique comme couverture de chaque toit en forme de selle.

9. Serre selon la revendication 8, caractérisée en ce que pour fixer et retenir la feuille en plastique sans l'endommager, au moins un certain nombre des barres de la structure de toiture sont configurées comme tronçons en forme de canal comportant un revêtement en plastique, une feuille agencée au-dessus de ces tronçons étant retenue dans ceux-ci par une bande de section appropriée à enfoncer dans le canal présentant la feuille posée sur lui.
